# EUROPEAN PATENT SPECIFICATION

(11) **EP 4 147 905 B1**
(45) Date of publication and mention of the grant of the patent: **17.09.2025**
(21) Application number: 21846406.3
(22) Date of filing: 16.04.2021
(51) Int. Cl.: B60N 2/26, B60N 2/28

(54) **AUXILIARY REMINDING APPARATUS FOR GEAR ADJUSTMENT OF CHILD SAFETY SEAT**
HILFSERINNERUNGSVORRICHTUNG ZUR GANGEINSTELLUNG EINES KINDERSICHERHEITSSITZES
APPAREIL DE RAPPEL AUXILIAIRE POUR LE RÉGLAGE D'ENGRENAGE D'UN SIÈGE DE SÉCURITÉ POUR ENFANT

(30) Priority: 20.07.2020 CN 202021428271 U
(43) Date of publication of application: 15.03.2023
(73) Proprietor: Ningbo Baby First Baby Products Co., Ltd., Yuyao, Zhejiang 315412 (CN)
(72) Inventor: WANG, Youping, Ningbo, Zhejiang 315412 (CN); LI, Yanan, Ningbo, Zhejiang 315412 (CN)
(74) Representative: Ipside
(86) International application number: PCT/CN2021/087830
(87) International publication number: WO 2022/016921

(56) References cited:
- CN-A- 109 228 975
- CN-A- 110 962 711
- CN-A- 110 962 711
- CN-U- 210 502 384
- CN-U- 210 502 386
- CN-U- 210 792 882
- CN-U- 212 950 268
- US-A1- 2010 283 596
- US-B1- 7 073 859

## Description

### Technical Field

The present invention relates to the technical field of child safety seats, and in particular to an auxiliary reminding apparatus for gear adjustment of a child safety seat.

### Background Art

An automobile child safety seat, also known as a child restraint system, is a seat installed in an automobile and specially designed for children of different ages or weights, so as to effectively improve the safety of the child riding in the automobile. In case of collision or sudden slowing down of the automobile, the child safety seat may buffer the impact force to the child and restrict the body of the child from moving so as to reduce injury to the child, thereby ensuring the safety when the child is riding in the automobile.

In order to satisfy the comfort requirements to a greater extent, the child safety seat is generally provided with a seat back rest angle adjustment mechanism, a seat rotation angle adjustment mechanism, etc. Most of these adjustment mechanisms employ a locking and unlocking mechanism to adjust a gear. For example, when the angle of a seat back rest is adjusted, a locking mechanism is unlocked by an unlocking device, so that the angle of the seat back rest is adjusted. Then the locking mechanism is locked when the angle is adjusted to a suitable gear. However, when a user adjusts the gear, generally, whether being locked in place cannot be directly seen, and is required to be determined by perception. This determination may be made mistakenly and cannot bring an intuitive feedback to the user.

Patent document CN110 962 711 A describes a child safety seat. The seat comprises a base, a seat body arranged on the base in a sliding mode, and a locking device used for locking the relative position between the base and the seat body.

Patent document CN210 502 386 U describes a child safety seat and a rotating mechanism thereof.

Patent document US7 073 859 B1 describes a child safety seat including a seat body that is attached to a base that is held in place by the vehicle seat belt.

### Summary of the Invention

The present invention designs an auxiliary reminding device for gear adjustment of a child safety seat, which solves the technical problem that when a user adjusts a gear, generally, whether being locked in place may not be directly seen, and it is required to be determined by perception. This determination may be made mistakenly and may not bring an intuitive feedback to the user.

To solve the technical problem described above, the present invention employs the following solution.

An auxiliary reminding apparatus for gear adjustment of a child safety seat includes a locking and unlocking mechanism. The locking and unlocking mechanism includes a locking state and an unlocking state. The child safety seat is provided with a reminding mechanism, the reminding mechanism including a trigger switch and an alarm (8), when the locking and unlocking mechanism is in the unlocking state, the trigger switch is triggered, such that the alarm (8) sends out a prompt signal, and when the locking and unlocking mechanism is in the locking state, the trigger switch is not triggered, such that the alarm (8) does not send out a prompt signal.

Further, the trigger switch is a travel switch (7).

Further, the alarm (8) is a buzzer, and the prompt signal is a sound prompt; or the alarm (8) is a vibration apparatus, and the prompt signal is a vibration prompt, or the alarm (8) is a warning lamp, and the prompt signal is a light prompt.

Further, the reminding mechanism further includes a printed circuit board (PCB) (3) and a battery (2), the battery (2) and the trigger switch being both arranged on the PCB (3).

Further, the locking and unlocking mechanism includes an upper cover (1), a lower cover (5), and pins (6), the lower cover (5) being arranged on the child safety seat, the upper cover (1) being slidably arranged above the lower cover (5), the pins (6) being configured for being connected to gear adjustment holes on the child safety seat for positioning, connecting struts (61) being provided above end portions of the pins (6), oblique slots (9) matching the connecting struts (61) being provided on the upper cover (1), upper ends of the connecting struts (61) being inserted into the oblique slots (9), the upper cover (1) sliding back and forth to drive the oblique slots (9) to displace, and the oblique slots (9) driving the pins (6) to move inwards or outwards for unlocking or locking; and further comprises a return mechanism for return of the upper cover (1).

Further, the pins (6) include a left pin and a right pin, and the oblique slots (9) include a left oblique slot matching the left pin and a right oblique slot matching the right pin.

Further, the reminding mechanism is arranged on the lower cover (5), a rib (10) matching the reminding mechanism is provided on a lower side surface of the upper cover (1), when the upper cover (1) is in an initial position, the rib (10) does not make contact with the reminding mechanism, and when the upper cover (1) slides forwards, the rib (10) makes contact with the reminding mechanism.

Further, a bevel is provided on the rib (10), the bevel inclining from front to back in a direction close to the reminding mechanism.

Further, the locking and unlocking mechanism is arranged between a seat body and a base and configured for adjusting an angle of inclination of the seat body relative to the base.

Further, the locking and unlocking mechanism is arranged on a base and configured for adjusting rotation of a seat. The auxiliary reminding apparatus for gear adjustment of a child safety seat has the beneficial effects as follows:
The auxiliary reminding apparatus for gear adjustment of the child safety seat of the present invention is provided with the reminding mechanism, which may send out a sound reminding when the locking and unlocking mechanism is not locked to a gear hole in place, thereby avoiding the risk of errors in manual determination, and moreover, making determination of a gear adjustment locking state become more intuitive, thus achieving use convenience.

### Brief Description of the Drawings

Fig. 1: an exploded view of an auxiliary reminding device for gear adjustment of a child safety seat of the present invention;
Fig. 2: a schematic diagram of a locking state of a locking and unlocking mechanism of the present invention; and
Fig. 3: a schematic diagram of an unlocking state of a locking and unlocking mechanism of the present invention.

List of reference numerals:
1 - upper cover; 2 - battery; 3 - printed circuit board (PCB); 4 - spring; 5 - lower cover; 6 - pin; 61 - connecting strut; 7 - travel switch; 8 - alarm; 9 - oblique slot; 10 - rib.

### Detailed Description of the Embodiments

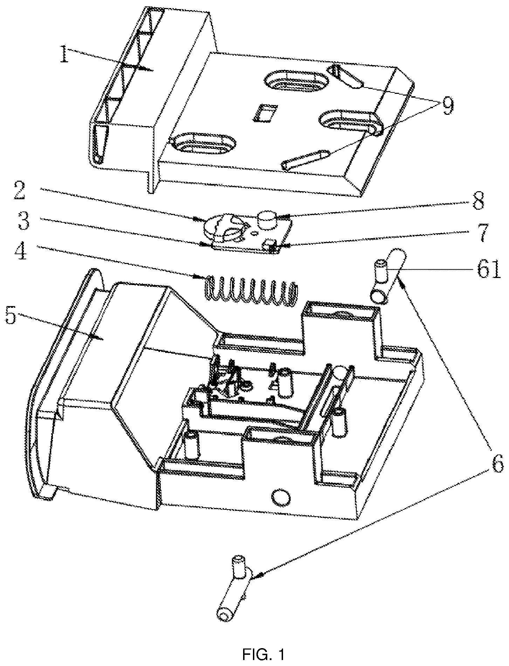

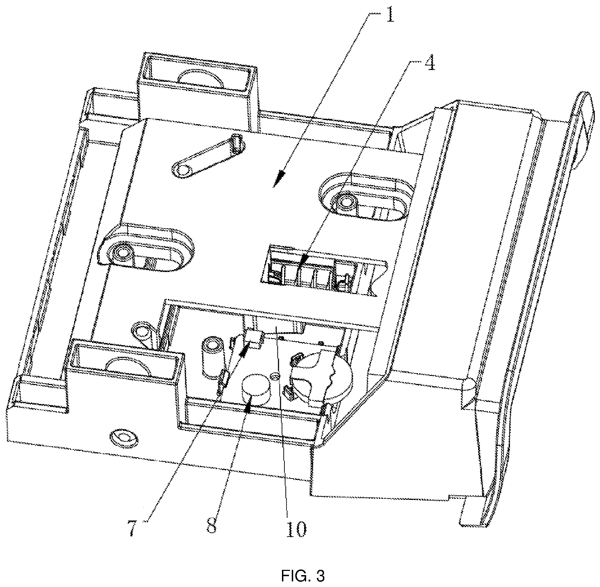

The present invention will be further described below with reference to Figs. 1-3:
As shown in Fig. 1, an auxiliary reminding device for gear adjustment of a child safety seat includes a locking and unlocking mechanism. The locking and unlocking mechanism is arranged between a seat body and a base and configured for adjusting an angle of inclination of the seat body relative to the base. Alternatively, the locking and unlocking mechanism is arranged on the base and configured for adjusting the rotation of the seat. The locking and unlocking mechanism includes a locking state and an unlocking state. The child safety seat is provided with a reminding mechanism. The reminding mechanism includes a trigger switch and an alarm 8. When the locking and unlocking mechanism is in an unlocking state, the trigger switch is triggered, so that the alarm 8 sends out a prompt signal. When the locking and unlocking mechanism is in a locking state, the trigger switch is not triggered, so that the alarm 8 does not send out a prompt signal.

The trigger switch is a travel switch 7, the alarm 8 is a buzzer, and the prompt signal is a sound prompt. Alternatively, the alarm 8 is a vibration apparatus, and the prompt signal is a vibration prompt. Alternatively, the alarm 8 is a warning lamp, and the prompt signal is a light prompt. The reminding mechanism further includes a printed circuit board (PCB) 3 and a battery 2, the battery 2 and the trigger switch being both arranged on the PCB 3.

The locking and unlocking mechanism includes an upper cover 1, a lower cover 5, and pins 6, wherein the lower cover 5 is arranged on the child safety seat, the upper cover 1 is slidably arranged above the lower cover 5, the pins 6 are used for being connected to gear adjustment holes on the child safety seat for positioning, connecting struts 61 are provided above end portions of the pins 6, oblique slots 9 matching the connecting struts 61 are provided on the upper cover 1, upper ends of the connecting struts 61 are inserted into the oblique slots 9, the upper cover 1 slides back and forth to drive the oblique slots 9 to displace, and the oblique slots 9 drive the pins 6 to move inwards or outwards for unlocking or locking. The pins 6 include a left pin and a right pin, and the oblique slots 9 include a left oblique slot matching the left pin and a right oblique slot matching the right pin.

The reminding mechanism is arranged on the lower cover 5, and a rib 10 matching the reminding mechanism is provided on a lower side surface of the upper cover 1. When the upper cover 1 is in an initial position, the rib 10 does not make contact with the reminding mechanism, and when the upper cover 1 slides forwards, the rib 10 makes contact with the reminding mechanism. A bevel is provided on the rib 10, the bevel inclining from front to rear in a direction close to the reminding mechanism.

The auxiliary reminding device for gear adjustment of a child safety seat further includes a return mechanism for return of the upper cover 1. The return mechanism is a spring 4, the spring 4 being horizontally arranged between the upper cover 1 and the lower cover 5, the spring 4 being connected to the upper cover 1 at a rear end, and being connected to the lower cover 5 at a front end, and the upper cover 1 and the lower cover 5 being both provided with connectors for being connected to the spring 4.

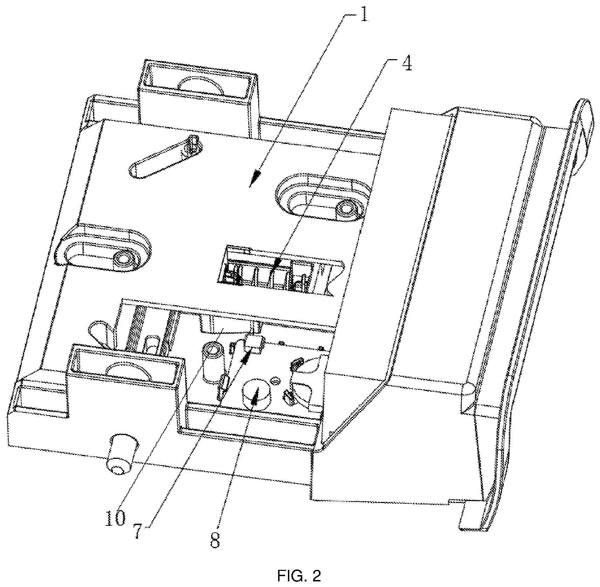

Operation principles of the present invention are as follows:
As shown in Fig. 2, in the locking state, the rib 10 on the upper cover 1 does not make contact with the travel switch 7, and the travel switch 7 is not triggered.

As shown in Fig. 2, when the upper cover 1 is pulled to move forwards, the spring 4 is compressed, the rib 10 on the upper cover 1 moves forwards with the upper cover 1, a distance between the rib 10 and the travel switch 7 is gradually reduced until the rib makes contact with the travel switch, the travel switch 7 is triggered, and the alarm 8 sends out the prompt signal for reminding. Moreover, the oblique slot 9 on the upper cover 1 moves forwards with the upper cover 1, the oblique slot 9 drives the pin 6 to move inwards until the pin 6 is separated from the gear hole on the child safety seat. In this case, the locking and unlocking mechanism is in the unlocking state, a user may adjust an angle of a seat back rest or a rotation angle of the seat. When the angle of the seat back rest or the rotation angle of the seat, etc. is adjusted to an appropriate gear, the upper cover 1 is released, the spring 4 returns to drive the upper cover 1 to move backwards for return, the travel switch 7 is separated from the rib 10, and the alarm 8 stop sending out the prompt signal.

Similarly, after the upper cover 1 is pulled to move forwards and the pin 6 is separated from the gear hole on the child safety seat, when the user adjusts the gear, the upper cover 1 may also be released. When the pin 6 does not correspond to the gear hole in an appropriate position, the spring 4 may not return, the rib 10 makes contact with the travel switch 7, the travel switch 7 is triggered, and the alarm 8 sends out the prompt signal for reminding. When the pin 6 corresponds to the gear hole, the spring 4 returns to drive the upper cover 1 to move backwards for return, the travel switch 7 is separated from the rib 10, and the alarm 8 stops sending out the prompt signal.

The present invention is exemplarily described above in combination with the accompanying drawings. Obviously, the implementation of the present invention is not limited by the implementation described above.

## Claims

1. An auxiliary reminding apparatus for gear adjustment of a child safety seat, comprising a locking and unlocking mechanism, the locking and unlocking mechanism comprising a locking state and an unlocking state, wherein the child safety seat is provided with a reminding mechanism comprising a trigger switch and an alarm (8), when the locking and unlocking mechanism is in the unlocking state, the trigger switch is triggered, such that the alarm (8) sends out a prompt signal, and when the locking and unlocking mechanism is in the locking state, the trigger switch is not triggered, such that the alarm (8) does not send out a prompt signal,
**characterized in that** the locking and unlocking mechanism comprises an upper cover (1), a lower cover (5), and pins (6), the lower cover (5) being arranged on the child safety seat, the upper cover (1) being slidably arranged above the lower cover (5), the pins (6) being configured for being connected to gear adjustment holes on the child safety seat for positioning, connecting struts (61) being provided above end portions of the pins (6), oblique slots (9) matching the connecting struts (61) being provided on the upper cover (1), upper ends of the connecting struts (61) being inserted into the oblique slots (9), the upper cover (1) sliding back and forth to drive the oblique slots (9) to displace, and the oblique slots (9) driving the pins (6) to move inwards or outwards for unlocking or locking; and further comprises a return mechanism for return of the upper cover (1);
and **in that** the reminding mechanism is arranged on the lower cover (5), a rib (10) matching the reminding mechanism is provided on a lower side surface of the upper cover (1), when the upper cover (1) is in an initial position, the rib (10) does not make contact with the reminding mechanism, and when the upper cover (1) slides forwards, the rib (10) makes contact with the reminding mechanism.

2. The auxiliary reminding apparatus for gear adjustment of a child safety seat according to claim 1, **characterized in that** the trigger switch is a travel switch (7).

3. The auxiliary reminding apparatus for gear adjustment of a child safety seat according to claim 1, **characterized in that** the alarm (8) is a buzzer, and the prompt signal is a sound prompt; or the alarm (8) is a vibration apparatus, and the prompt signal is a vibration prompt, or the alarm (8) is a warning lamp, and the prompt signal is a light prompt.

4. The auxiliary reminding apparatus for gear adjustment of a child safety seat according to claim 1, **characterized in that** the reminding mechanism further comprises a printed circuit board (PCB) (3) and a battery (2), the battery (2) and the trigger switch being both arranged on the PCB (3).

5. The auxiliary reminding apparatus for gear adjustment of a child safety seat according to claim 1, **characterized in that** the pins (6) comprise a left pin and a right pin, and the oblique slots (9) comprise a left oblique slot matching the left pin and a right oblique slot matching the right pin.

6. The auxiliary reminding apparatus for gear adjustment of a child safety seat according to claim 1, **characterized in that** a bevel is provided on the rib (10), the bevel inclining from front to back in a direction close to the reminding mechanism.

7. The auxiliary reminding apparatus for gear adjustment of a child safety seat according to claim 1, **characterized in that** the locking and unlocking mechanism is arranged between a seat body and a base and configured for adjusting an angle of inclination of the seat body relative to the base.

8. The auxiliary reminding apparatus for gear adjustment of a child safety seat according to claim 1, **characterized in that** the locking and unlocking mechanism is arranged on a base and configured for adjusting the rotation of the seat.

## Patentansprüche

1. Hilfserinnerungseinrichtung zur Gangeinstellung eines Kindersitzes, umfassend einen Verriegelungs- und Entriegelungsmechanismus, wobei der Verriegelungs- und Entriegelungsmechanismus einen Verriegelungszustand und einen Entriegelungszustand umfasst, wobei
der Kindersitz mit einem Erinnerungsmechanismus ausgestattet ist, der einen Auslöseschalter und einen Alarm (8) umfasst, wenn der Verriegelungs- und Entriegelungsmechanismus sich im Entriegelungszustand befindet, der Auslöseschalter ausgelöst wird, sodass der Alarm (8) ein Aufforderungssignal aussendet, und wenn der Verriegelungs- und Entriegelungsmechanismus sich im Verriegelungszustand befindet, der Auslöseschalter nicht ausgelöst wird, sodass der Alarm (8) kein Aufforderungssignal aussendet,
**dadurch gekennzeichnet, dass** der Verriegelungs- und Entriegelungsmechanismus eine obere Abdeckung (1), eine untere Abdeckung (5) und Stifte (6) umfasst, wobei die untere Abdeckung (5) am Kindersitz angeordnet ist, wobei die obere Abdeckung (1) über der unteren Abdeckung (5) gleitbar angeordnet ist, wobei die Stifte (6) so eingerichtet sind, dass sie mit Verstellbohrungen am Kindersitz zur Positionierung verbunden sind, wobei Verbindungsstreben (61) oberhalb von Endabschnitten der Stifte (6) vorgesehen sind, wobei schräge Schlitze (9) zu den Verbindungsstreben (61) passen, die an der oberen Abdeckung (1) vorgesehen sind, wobei die oberen Enden der Verbindungsstreben (61) in die schrägen Schlitze (9) eingeführt werden, wobei die obere Abdeckung (1) hin und her gleitet, um die schrägen Schlitze (9) zum Verschieben anzutreiben, und die schrägen Schlitze (9) die Stifte (6) zum Ein- oder Ausfahren für das Entriegeln oder Verriegeln antreiben; und ferner einen Rückstellmechanismus zum Zurückstellen der oberen Abdeckung (1) umfasst;
und dadurch, dass der Erinnerungsmechanismus auf der unteren Abdeckung (5) angeordnet ist, wobei eine dem Erinnerungsmechanismus entsprechende Rippe (10) auf einer unteren Seitenfläche der oberen Abdeckung (1) vorgesehen ist, wenn sich die obere Abdeckung (1) in einer Ausgangsposition befindet, die Rippe (10) keinen Kontakt mit dem Erinnerungsmechanismus hat, und wenn die obere Abdeckung (1) nach vorn gleitet, die Rippe (10) Kontakt mit dem Erinnerungsmechanismus hat.

2. Hilfserinnerungseinrichtung zur Gangeinstellung eines Kindersitzes nach Anspruch 1, **dadurch gekennzeichnet, dass** der Auslöseschalter ein Fahrschalter (7) ist.

3. Hilfserinnerungsvorrichtung zur Gangeinstellung eines Kindersitzes nach Anspruch 1, **dadurch gekennzeichnet, dass** der Alarm (8) ein Summer ist und das Aufforderungssignal eine akustische Aufforderung ist; oder der Alarm (8) eine Vibrationsvorrichtung ist und das Aufforderungssignal eine Vibrationsaufforderung ist, oder der Alarm (8) eine Warnleuchte ist und das Aufforderungssignal eine Lichtaufforderung ist.

4. Hilfserinnerungseinrichtung zur Gangeinstellung eines Kindersitzes nach Anspruch 1, **dadurch gekennzeichnet, dass** der Erinnerungsmechanismus ferner eine Leiterplatte (Printed Circuit Board, PCB) (3) und eine Batterie (2) umfasst, wobei die Batterie (2) und der Auslöseschalter beide auf der PCB (3) angeordnet sind.

5. Hilfserinnerungseinrichtung zur Gangeinstellung eines Kindersitzes nach Anspruch 1, **dadurch gekennzeichnet, dass** die Stifte (6) einen linken Stift und einen rechten Stift umfassen und die schrägen Schlitze (9) einen dem linken Stift entsprechenden linken schrägen Schlitz und einen dem rechten Stift entsprechenden rechten schrägen Schlitz umfassen.

6. Hilfserinnerungseinrichtung zur Gangeinstellung eines Kindersitzes nach Anspruch 1, **dadurch gekennzeichnet, dass** an der Rippe (10) eine Fase vorgesehen ist, wobei die Fase von vorne nach hinten in eine Richtung nahe dem Erinnerungsmechanismus geneigt ist.

7. Hilfserinnerungseinrichtung zur Gangeinstellung eines Kindersitzes nach Anspruch 1, **dadurch gekennzeichnet, dass** der Verriegelungs- und Entriegelungsmechanismus zwischen einem Sitzkörper und einem Sockel angeordnet und zum Einstellen eines Neigungswinkels des Sitzkörpers relativ zum Sockel ausgebildet ist.

8. Hilfserinnerungseinrichtung zur Gangeinstellung eines Kindersitzes nach Anspruch 1, **dadurch gekennzeichnet, dass** der Verriegelungs- und Entriegelungsmechanismus auf einem Sockel angeordnet und zum Verstellen der Drehung des Sitzes eingerichtet ist.

## Revendications

1. Appareil de rappel auxiliaire pour le réglage d'engrenage d'un siège de sécurité pour enfant, comportant un mécanisme de verrouillage et de déverrouillage, le mécanisme de verrouillage et de déverrouillage comportant un état de verrouillage et un état de déverrouillage, dans lequel
le siège de sécurité pour enfant est pourvu d'un mécanisme de rappel comportant un interrupteur de déclenchement et une alarme (8), lorsque le mécanisme de verrouillage et de déverrouillage est à l'état de déverrouillage, l'interrupteur de déclenchement est déclenché, de sorte que l'alarme (8) envoie un signal d'invitation, et lorsque le mécanisme de verrouillage et de déverrouillage est à l'état de verrouillage, l'interrupteur de déclenchement n'est pas déclenché, de sorte que l'alarme (8) n'envoie pas de signal d'invitation,
**caractérisé en ce que** le mécanisme de verrouillage et de déverrouillage comporte un cache supérieur (1), un cache inférieur (5) et des goupilles (6), le cache inférieur (5) étant agencé sur le siège de sécurité pour enfant, le cache supérieur (1) étant agencé de manière coulissante au-dessus du cache inférieur (5), les goupilles (6) étant configurées pour être reliées à des trous de réglage d'engrenage sur le siège de sécurité pour enfant pour le positionnement, des entretoises de liaison (61) étant prévues au-dessus de parties d'extrémité des goupilles (6), des fentes obliques (9) correspondant aux entretoises de liaison (61) étant prévues sur le cache supérieur (1), les extrémités supérieures des entretoises de liaison (61) étant insérées dans les fentes obliques (9), le cache supérieur (1) glissant d'avant en arrière pour entraîner les fentes obliques (9) à se déplacer, et les fentes obliques (9) entraînant les goupilles (6) à se déplacer vers l'intérieur ou l'extérieur pour le déverrouillage ou le verrouillage ; et comporte en outre un mécanisme de retour pour le retour du cache supérieur (1) ;
et **en ce que** le mécanisme de rappel est agencé sur le cache inférieur (5), une nervure (10) correspondant au mécanisme de rappel est prévue sur une surface latérale inférieure du cache supérieur (1), lorsque le cache supérieur (1) est dans une position initiale, la nervure (10) n'entre pas en contact avec le mécanisme de rappel, et lorsque le cache supérieur (1) coulisse vers l'avant, la nervure (10) entre en contact avec le mécanisme de rappel.

2. Appareil de rappel auxiliaire pour le réglage d'engrenage d'un siège de sécurité pour enfant selon la revendication 1, **caractérisé en ce que** l'interrupteur de déclenchement est un interrupteur de déplacement (7).

3. Appareil de rappel auxiliaire pour le réglage d'engrenage d'un siège de sécurité pour enfant selon la revendication 1, **caractérisé en ce que** l'alarme (8) est un buzzer, et le signal d'invitation est une invite sonore ; ou l'alarme (8) est un appareil de vibration, et le signal d'invitation est une invite de vibration, ou l'alarme (8) est un voyant d'avertissement, et le signal d'invitation est une invite lumineuse.

4. Appareil de rappel auxiliaire pour le réglage d'engrenage d'un siège de sécurité pour enfant selon la revendication 1, **caractérisé en ce que** le mécanisme de rappel comporte en outre une carte de circuit imprimé (PCB) (3) et une batterie (2), la batterie (2) et l'interrupteur de déclenchement étant tous deux agencés sur la PCB (3).

5. Appareil de rappel auxiliaire de réglage d'engrenage d'un siège de sécurité enfant selon la revendication 1, **caractérisé en ce que** les goupilles (6) comportent une goupille gauche et une goupille droite, et les fentes obliques (9) comportent une fente oblique gauche correspondant à la goupille gauche et une fente oblique droite correspondant à la goupille droite.

6. Appareil de rappel auxiliaire pour le réglage d'engrenage d'un siège de sécurité enfant selon la revendication 1, **caractérisé en ce qu'**un biseau est prévu sur la nervure (10), le biseau s'inclinant d'avant en arrière dans une direction proche du mécanisme de rappel.

7. Appareil de rappel auxiliaire de réglage d'engrenage d'un siège de sécurité pour enfant selon la revendication 1, **caractérisé en ce que** le mécanisme de verrouillage et de déverrouillage est agencé entre un corps de siège et une base et configuré pour régler un angle d'inclinaison du corps de siège par rapport à la base.

8. Appareil de rappel auxiliaire de réglage d'engrenage d'un siège de sécurité pour enfant selon la revendication 1, **caractérisé en ce que** le mécanisme de verrouillage et de déverrouillage est agencé sur une base et configuré pour régler la rotation du siège.
